# EUROPEAN PATENT SPECIFICATION

(11) **EP 2 639 089 B1**
(45) Date of publication and mention of the grant of the patent: **11.01.2017**
(21) Application number: 12191172.1
(22) Date of filing: 02.11.2012
(51) Int. Cl.: B60G 21/05, B60B 35/02

(54) **Torsion beam axle having ring member friction-welded to trailing arm**
Drehstrahlachse mit Ringelement, das an einen Auslegerarm reibgeschweißt ist
Essieu avec barre de torsion présentant un élément de bague soudé par friction au bras longitudinal

(30) Priority: 12.03.2012 KR 20120024806
(43) Date of publication of application: 18.09.2013
(73) Proprietor: Austem Co. Ltd., Susin-myeon, Cheonan-si Chungcheongnam-do 330-882 (KR)
(72) Inventor: Lee, Kyoung Taek, Incheon 401-074 (KR); Ko, Hyung Gyu, Gyeonggi-do 422-241 (KR); Shin, Myong Ho, Incheon 402-020 (KR)
(74) Representative: Chaillot, Geneviève

(56) References cited:
- EP-A2- 1 036 680
- WO-A1-2008/004715
- GB-A- 2 474 324

## Description

### [Technical Field]

The present invention relates to a torsion beam axle, and more particularly to a torsion beam axle having a ring member which is provided between a torsion beam and a trailing arm to be friction-welded to the trailing arm.

### [Background Art]

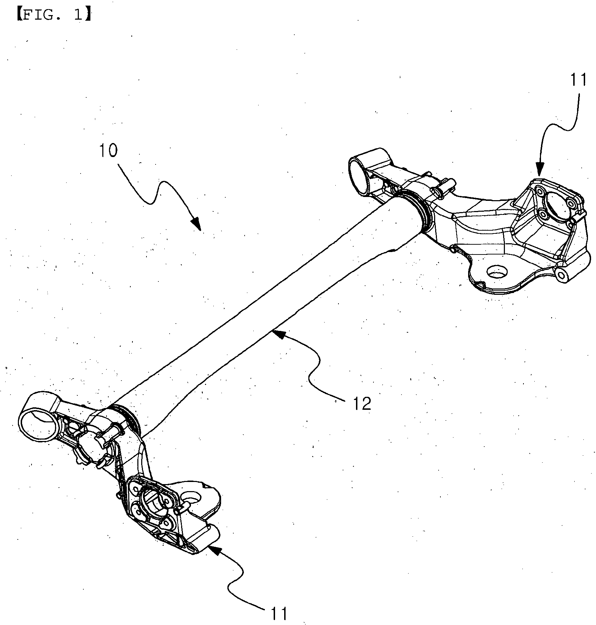

A torsion beam axle (refer to 10 in FIG. 1) is a suspension system for supporting vehicle wheels to a chassis and comprises a plurality of trailing arms (refer to 11 in FIG. 1) each of which is coupled to a front (rear) lateral wheel and to the chassis respectively, and a torsion beam (refer to 12 in FIG. 1) which is connected between the trailing arms.

Such a torsion beam axle realizes a torsion beam which has characteristics of twisting accordingly as there arises a twist between a left lateral wheel and a right lateral wheel. The torsion beam axle has its principal technological problems in that it has to have excellence in securing a trunk room and competitive price and in that it has to accomplish a light weight of the chassis through an optimized design of the torsion beam.

As for the material of the torsion beam axle, aluminum alloy casting is used for the trailing arm to enhance a supporting force of the lateral wheels and steel is used for the torsion beam to have elastic torsional deformation in order to easily absorb the torsion between the right and left lateral wheels which is generated when traveling.

Therefore, as the trailing arm and the torsion beam use different materials as described above, there is raised an important issue of coupling method between different materials in that a coupling strength between the trailing arm and the torsion beam has to be guaranteed in the manufacturing process enough to satisfy a predetermined load condition required to the torsion beam axle.

Although there were conventional cases where coupling elements such as bolt, nut and etc. were used as coupling means between such a trailing arm and a torsion beam, they have a problem of easy breakdown due to weak coupling strength.

Also, friction welding method may be introduced where the trailing arm and the torsion beam can be joined together through rotational surface contact therebetweeen. However, to adopt such method, not only an expensive and large-sized apparatus is required due to a comparably large-sized and heavy-weight torsion beam but also it is hard to meet the accuracy of the joining position.

Therefore, the friction welding was not considered as a proper alternative method.

WO 2008/004715 discloses a torsion beam axle as defined in the preamble of claim 1.

### [Disclosure]

### [Technical Problem]

Accordingly, it is an object of the present invention to provide a torsion beam axle which can maintain an enhanced coupling force between a trailing arm and a torsion beam that are of different materials therebetween.

### [Technical Solution]

In order to accomplish the above object, the present invention provides a torsion beam axle comprising a torsion beam whose both end parts have a cross section of a circular shape and a pair of trailing arms which are perpendicularly and integrally coupled to the both end parts of the torsion beam, wherein each of the trailing arms is formed with a circular joining surface which has at least a predetermined width in a radial direction to correspond to the end part of the torsion beam, and the torsion beam axle further comprises a ring member having in an axial direction one end surface which is correspondingly contacted to the circular joining surface and coupled thereto by friction welding to be integrally coupled to the trailing arm, and the other end surface which is correspondingly contacted to the end part of the torsion beam and welded thereto to be integrally coupled to the torsion beam.

According to an aspect of the present invention, the torsion beam and a pair of the trailing arm are made of different materials therebetween, and the ring member is made of a material whose weldability to the torsion beam is better than that of the trailing arm.

According to an aspect of the present invention, the trailing arm is made of aluminum alloy, and the torsion beam and the ring member are made of steel.

According to an aspect of the present invention, the ring member is made of the same material as the torsion beam.

### [Advantageous Effects]

According to the torsion beam axle of the present invention as described above, a ring member is provided between a torsion beam and a trailing arm and integrally coupled to the trailing arm through the friction welding, then the torsion beam and the ring member can be integrally coupled together through a conventional welding. Therefore, coupling force between the trailing arm and the torsion beam can be enhanced. Also, as the friction welding method can be adopted by using a very small-sized ring member compared to the torsion beam, miniaturization of the required apparatus and high accuracy of the joining position can be accomplished.

### [Description of Drawings]

FIG. 1 is a perspective view of a torsion beam axle according to an exemplary embodiment of the present invention;
FIG. 2 is a perspective view of a trailing arm which is one of the elements constituting the torsion beam axle of FIG. 1;
FIG. 3 is a perspective view to explain a process of coupling a ring member to the trailing arm of FIG. 2 through friction welding;
FIG. 4 is a perspective view of a torsion beam which is one of the elements constituting the torsion beam axle of FIG. 1; and
FIG. 5 is a partially expanded perspective view to explain a process of coupling the torsion beam of FIG. 4 to the trailing arm of FIG. 3.

### [Best Mode]

As shown in FIG. 1, a torsion beam axle 10 according to an exemplary embodiment of the present invention has a structure where a pair of trailing arms 11 are coupled perpendicularly and integrally to both ends of a torsion beam 12.

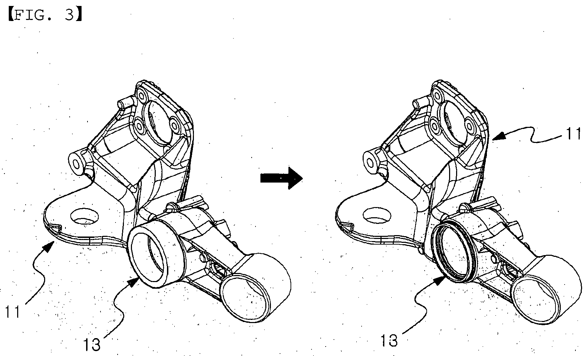

The trailing arm 11 is formed with parts to be coupled to a chassis part and a wheel part, and coupled to a torsion beam 110 integrally through a ring member 13 (refer to FIG. 3) as will be described later.

Different from the torsion beam 12, it is preferable that the trailing arm 11 be made of a material of high strength in order not to be easily deformed by an outer force through the chassis or the wheels. Usually, aluminum alloy of high strength is used for the material.

The torsion beam 12 has a shape of a continuous tube with its center part having a cross section of 'U' or 'V' shaped curve to easily have elastic and torsional deformation. As a material of such a torsion beam 110, steel may be used.

The torsion beam 12 may be manufactured by a method of pressing and deforming a hollow tube of a circular cross section by hydro-forming.

With such a structure of the torsion beam axle 10, different outer forces acting from both lateral wheels can be absorbed through the torsional deformation of the torsion beam 12, and the wheels and the chassis can be strongly supported by the trailing arms 11 at both ends.

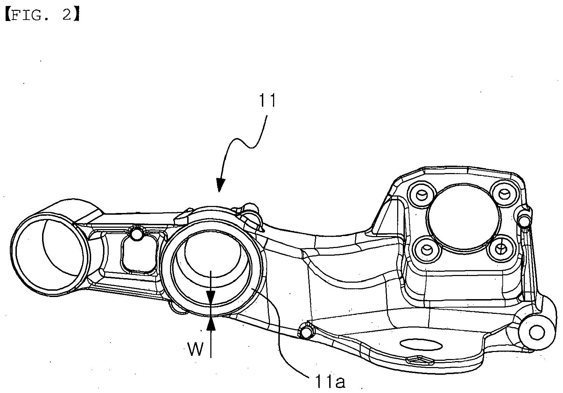

In this embodiment, the trailing arms 11 are formed with a protruded circular joining surface 11a, as shown in FIG. 2, at a part corresponding to both ends of the torsion beam 12.

It is preferable that the circular joining surface 11a is formed to have at least predetermined with W in a radial direction so that an axially end surface of the ring member 13 can be contacted to the circular joining surface 11a and accommodated therein as shown in FIG. 3.

The ring member 13 whose axially end surface is contacted to the trailing arm 11 through the circular joining surface 11a is then rotated to an high speed in a state that it is pressed together with the trailing arm 11 in the axial direction, so that the ring member 13 and the trailing arm 11 are integrally coupled to each other by the friction welding therebetween (refer to a right-side drawing of FIG. 3).

The other end surface of the ring member 13 which has been integrally coupled to the trailing arm 11 by the friction welding as described above is coupled to an end part of the torsion beam 12 (refer to FIG. 1).

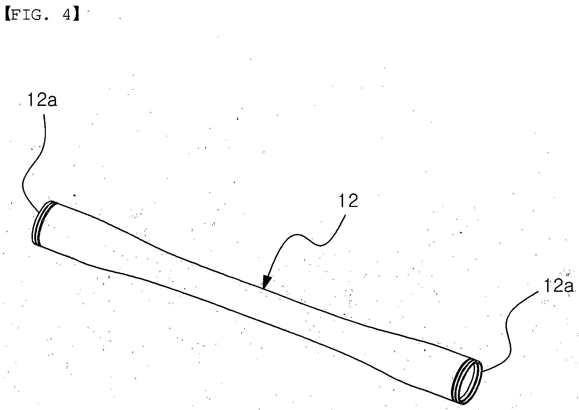

To this end, as shown in FIG. 4, both end parts 12a in a longitudinal direction of the torsion beam 12 has a cross section of a circular shape to correspond to the other end surface of the ring member 13.

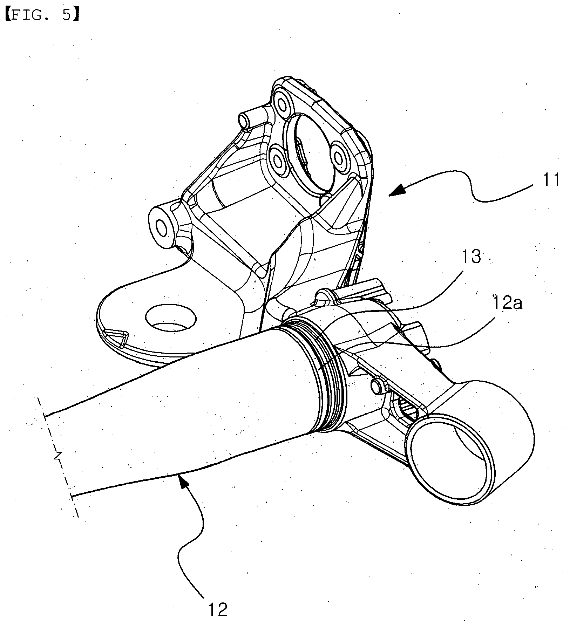

As shown in FIG. 5, the coupling between the torsion beam 12 and the trailing arm 11 can be accomplished by surface contacting the end part 12a of the torsion beam 12 to the axially end part of the ring member 13 and integrally coupling together by welding.

In this case, the welding needs not to be the friction welding but may be a conventional welding such as gas welding, arc welding and etc. in this embodiment, magnetic welding among the conventional welding methods is used.

Although the friction welding described above is adopted for joining between different materials, it is preferable that a conventional welding be made between materials of the same kind that can show a good weldability.

That is, as the torsion beam 12 is usually made of steel, it is preferable that the ring member 13 described above be made of a material whose weldability to the torsion beam 12 is better than that of the trailing arm 11, especially steel which is the same material of the torsion beam 12.

## Claims

1. A torsion beam axle (10) comprising a torsion beam (12) whose both end parts (12a) have a cross section of a circular shape and a pair of trailing arms (11) which are perpendicularly and integrally coupled to the both end parts (12a) of the torsion beam (12), wherein
each of the trailing arms (11) is formed with a circular joining surface (11a) which has at least a predetermined width (W) in a radial direction to correspond to the end part of the torsion beam (12), and
characterizd by the fact the torsion beam axle (10) further comprises a ring member (13) having in an axial direction one end surface which is correspondingly contacted to the circular joining surface (11a) and coupled thereto by friction welding to be integrally coupled to the trailing arm (11), and the other end surface which is correspondingly contacted to the end part of the torsion beam (12) and welded thereto to be integrally coupled to the torsion beam (12).

2. The torsion beam axle (10) according to claim 1, wherein the torsion beam (12) and a pair of the trailing arms (11) are made of different materials therebetween, and the ring member (13) is made of a material whose weldability to the torsion beam (12) is better than that of the trailing arm (11).

3. The torsion beam axle (10) according to claim 2, wherein the trailing arm (11) is made of aluminum alloy, and the torsion beam (12) and the ring member (13) are made of steel.

4. The torsion beam axle (10) according to any one of claims 1 to 3, wherein the ring member (13) is made of the same material as the torsion beam (12).

## Patentansprüche

1. Drehstrahlachse (10) mit einem Drehstrahl (12), dessen beide Endteile (12a) einen runden Querschnitt und ein Paar Auslegerarme (11) haben, die senkrecht und fest mit den beiden Endteilen (12a) des Drehstrahls (12) verbunden sind, wobei jeder der Auslegerarme (11) mit einer runden Verbindungsoberfläche (11a) gebildet ist, die mindestens eine vorherbestimmte Breite (W) in einer radialen Richtung hat, um dem Endteil des Drehstrahls (12) zu entsprechen, **dadurch gekennzeichnet, dass** die Drehstrahlachse (10) des Weiteren ein Ringelement (13) umfasst, mit einer Endoberfläche in axialer Richtung, die dementsprechend mit der runden Verbindungsoberfläche (11a) kontaktiert und daran reibgeschweißt ist, um fest mit dem Auslegerarm (11) verbunden zu sein, und die andere Endoberfläche ist dementsprechend mit dem Endteil des Drehstrahls (12) kontaktiert und daran geschweißt, um fest mit dem Drehstrahl (12) verbunden zu sein.

2. Drehstrahlachse (10) nach Anspruch 1, wobei der Drehstrahl (12) und ein Paar der Auslegerarme (11) aus verschiedenen Materialien sind und das Ringelement (13) aus einem Material besteht, dessen Schweißbarkeit an den Drehstrahl (12) besser ist als die des Auslegerarms (11).

3. Drehstrahlachse (10) nach Anspruch 2, wobei der Auslegerarm (11) aus einer Aluminiumlegierung besteht und der Drehstrahl (12) und das Ringelement (13) aus Stahl sind.

4. Drehstrahlachse (10) nach einem beliebigen der Ansprüche 1 bis 3, wobei das Ringelement (13) aus demselben Material besteht wie der Drehstrahl (12).

## Revendications

1. Essieu à barre de torsion (10) comprenant une barre de torsion (12) dont les deux parties d'extrémité (12a) ont une section transversale d'une forme circulaire et une paire de bras tirés (11) qui sont couplés perpendiculairement et d'une seule pièce aux deux parties d'extrémité (12a) de la barre de torsion (12),
chacun des bras tirés (11) est formé avec une surface de liaison circulaire (11a) qui a au moins une largeur prédéterminée (W) dans une direction radiale pour correspondre à la partie d'extrémité de la barre de torsion (12), et
**caractérisé par le fait que** l'essieu à barre de torsion (10) comprend en outre un élément annulaire (13) ayant, dans une direction axiale, une surface d'extrémité qui est en contact de manière correspondante avec la surface de liaison circulaire (11a) et couplée à celle-ci par soudage par friction pour un couplage d'un seul tenant au bras tiré (11), et l'autre surface d'extrémité qui est en contact de manière correspondante avec la partie d'extrémité de la barre de torsion (12) et soudée à celle-ci pour un couplage d'un seul tenant à la barre de torsion (12).

2. Essieu à barre de torsion (10) selon la revendication 1, dans lequel la barre de torsion (12) et une paire des bras tirés (11) sont faits de différents matériaux, et l'élément annulaire (13) est fait d'un matériau dont la capacité de soudage à la barre de torsion (12) est meilleure que celle du bras tiré (11).

3. Essieu à barre de torsion (10) selon la revendication 2, dans lequel le bras tiré (11) est fait d'alliage d'aluminium, et la barre de torsion (12) et l'élément annulaire (13) sont faits d'acier.

4. Essieu à barre de torsion (10) selon l'une quelconque des revendications 1 à 3, dans lequel l'élément annulaire (13) est fait du même matériau que la barre de torsion (12).
